# EUROPÄISCHE PATENTSCHRIFT

(11) **EP 2 667 100 B1**
(45) Veröffentlichungstag und Bekanntmachung des Hinweises auf die Patenterteilung: **01.04.2015**
(21) Anmeldenummer: 12004011.8
(22) Anmeldetag: 23.05.2012
(51) Int. Cl.: F24D 3/14, F24D 3/16, E04C 2/52, E04C 2/04, E04C 2/32

(54) **Verbundbauelement für eine Fußboden-, Wand- oder Deckenklimatisierungsvorrichtung eines Gebäudes sowie Verfahren zu seiner Herstellung**
Composite construction element for a floor, wall or ceiling air conditioning device of a building and method for producing the same
élément de construction mixte pour un dispositif de climatisation au plafond, au mur ou au sol d'un bâtiment ainsi que son procédé de fabrication

(43) Veröffentlichungstag der Anmeldung: 27.11.2013
(73) Patentinhaber: INCOTEC GmbH & Co. KG, 90518 Altdorf (DE)
(72) Erfinder: Meier, Willibald, 90559 Burgthann (DE)
(74) Vertreter: Wiedemann, Markus

(56) Entgegenhaltungen:
- EP-A2- 0 017 839
- EP-A2- 0 955 503
- WO-A2-2007/033255
- DE-A1-102008 019 888
- DE-A1-102009 055 440
- DE-U1-202005 009 254
- US-A- 4 766 951

## Beschreibung

Die Erfindung betrifft ein Verbundbauelement für eine Fußboden-, Wand- oder Deckenklimatisierungsvorrichtung eines Gebäudes, beinhaltend wenigstens ein zum Durchfluss eines flüssigen Wärmeträgers vorgesehenes Rohr, welches mit wenigstens einem Teil seines Querschnitts in wenigstens einer Grahitexpandat enthaltenden Wärmeleitplatte aufgenommen ist, gemäß dem Oberbegriff von Anspruch 1 sowie ein Verfahren zu seiner Herstellung nach Anspruch 18.

Ein gattungsgemäßes Verbundbauelement ist beispielsweise aus DE 20 2005 009 254 U1 bekannt. Dort sind als Wärmetauscherrohre in eine Platte aus verpresstem Graphit eingebettet, wobei zur Ausbildung eines Sandwischaufbaus auf der Rückseite der Platte eine Schicht aus Mineralfaserdämmstoff und zum Raum hin eine Dekorplatte vorgesehen ist. Einer oder mehrere solcher Sandwichaufbauten sind in einem Rahmen aus Metall angeordnet, um die erforderliche Stabilität zu gewährleisten und die Sandwichaufbauten an einer Decke oder einer Wand zu befestigen.

Der Erfindung liegt demgegenüber die Aufgabe zugrunde, ein Verbundbauelement der oben erwähnten Art derart fortzubilden, dass es einfacher herstellbar und montierbar ist. Weiterhin soll ein kostengünstiges verfahren zu seiner Herstellung zur Verfügung gestellt werden.

Diese Aufgabe wird erfindungsgemäß durch die Merkmale der nebengeordneten Ansprüche 1 und 18 gelöst.

### Offenbarung der Erfindung

Erfindungsgemäß wird vorgeschlagen, dass das Verbundbauelement per se als eigensteife und selbsttragende Struktur aus der wenigstens einen Wärmeleitplatte und wenigstens einer diese tragenden, aus einem oder mehreren nicht Grahitexpandat enthaltenden Materialien bestehenden Trägerplatte ausgeführt ist, wobei die Trägerplatte einen U-förmigen Querschnitt mit Schenkeln aufweist, welche die Wärmeleitplatte an deren Seitenflächen wenigstens teilweise umgreifen und die wenigstens eine Wärmeleitplatte und die wenigstens eine Trägerplatte an Kontaktflächen miteinander stoffschlüssig verbunden sind, welche die Schenkel der Trägerplatte und die Seitenflächen der Wärmeleitplatte wenigstens teilweise umfassen.

Unter "per se eigensteif" und "per se selbsttragend" soll dabei verstanden werden, dass das Verbundbauelement ohne weitere tragende Struktur oder ohne weitere versteifende Bauelemente als solches an einem Fußboden, einer Decke oder an einer Wand eines Bauwerks oder Gebäudes befestigt werden kann, ohne dass es zu die Funktion, die Optik oder die Geometrie des Verbundbauelements beeinträchtigenden Verformungen des Verbundbauelements kommt. Dabei ist insbesondere vorgesehen, dass das Verbundbauelement nur stellenweise an dem Fußboden, der Decke oder an der Wand des Bauwerks oder des Gebäudes befestigt oder abgestützt wird, so dass der Fußboden, die Decke oder die Wand nicht oder nur unwesentlich zur Versteifung des Verbundbauelements beitragen kann. Daher weist das Verbundbauelement noch einen lichten Abstand zu der Decke, der Wand oder zu dem Fußboden auf.

Zu einer eigensteifen Ausführung trägt vor allem der beidseitige Umgriff der Wärmeleitplatte durch die Schenkel der Trägerplatte in Kombination mit der stoffschlüssigen Verbindung zwischen Wärmeleitplatte und der diese stützenden Trägerplatte bei, wobei sich aus dieser Geometrie eine hohe Formsteifigkeit ergibt.

Weil die Wärmeleitplatte mit der Trägerplatte stoffschlüssig verbunden ist, beispielsweise durch Klebung, kann das Verbundbauelement bei geeigneter Ausbildung der Trägerplatte hinsichtlich Material, Abmessungen und Geometrie sehr steif ausgeführt werden, was einen zusätzlichen Trägerrahmen entbehrlich macht, mit welchem das Verbundbauelement beispielsweise an einer Wand oder Decke befestigt wird. Vielmehr kann dann das Verbundbauelement als Baueinheit direkt oder indirekt an einem Fußboden, einer Wand oder Decke befestigt werden, wobei dann die Wärmeleitplatte in den zu klimatisierenden Raum des Gebäudes weist. Dadurch kann auch das Gewicht des Verbundbauelements vorteilhaft gering ausfallen. Demgegenüber kann die Wärmeleitplatte dann hauptsächlich nach dem Gesichtspunkt einer optimalen Wärmeleitung bzw. eines optimalen Wärmeübergangs konzipiert werden und braucht, durch die steife Trägerplatte gestützt und getragen, keine hohen Anforderungen an ihre Eigensteifigkeit erfüllen.

Mithin sind keine weiteren Elemente zur Versteifung des eigensteifen Verbundbauelements notwendig. Ein stützender Rahmen wie beim oben beschriebenen Stand der Technik kann entfallen, so dass das eigensteife Verbundelement auch sehr leicht und einfach ausgeführt werden kann.

Das Verfahren zur Herstellung eines Verbundbauelements für eine Fußboden-, Wand- oder Deckenklimatisierungsvorrichtung eines Gebäudes, beinhaltet wenigstens folgende Schritte:
a) Herstellen wenigstens einer ebenen Trägerplatte aus einem oder mehreren nicht Graphitexpandat enthaltenden Materialien,
b) Fertigen von etwa dreieckförmigen Einschnitten in einer Kontaktfläche der Trägerplatte mit einer zugeordneten Kontaktfläche wenigstens einer Wärmeleitplatte, so dass zumindest zwei sich gegenüber liegende Randabschnitte der Trägerplatte durch die Einschnitte von einem Grundkörper zwar teilweise getrennt sind, aber noch eine materielle und elastisch biegbare Verbindung zwischen den Randabschnitten und dem Grundkörper vorhanden ist,
c) Fertigen wenigstens einer Nut in dem Grundkörper der Trägerplatte für wenigstens einen Teil des Querschnitts eines zum Durchfluss eines flüssigen Wärmeträgers vorgesehenen Rohrs gefertigt wird, und/oder Fertigen einer Nut in der Wärmeleitplatte für wenigstens einen Teil des Querschnitts eines zum Durchfluss eines flüssigen Wärmeträgers vorgesehenen Rohrs,
d) Abklappen der Randabschnitte der Trägerplatte gegenüber dem Grundkörper, um einen im Wesentlichen U-förmigen Querschnitt der Trägerplatte zu erzeugen,
e) Einsetzen der Wärmeleitplatte in den U-förmigen Querschnitt der Trägerplatte derart, dass die abgeklappten Randabschnitte der Trägerplatte die Wärmeleitplatte an deren Seitenflächen umgreifen, sich die Trägerplatte und die Wärmeleitplatte an den Kontaktflächen gegenseitig kontaktieren und das wenigstens eine Rohr in der Nut der Trägerplatte und/oder in der Nut der Wärmeleitplatte fixiert ist,
f) stoffschlüssiges Verbinden der Trägerplatte und der Wärmeleitplatte an den Kontaktflächen, welche wenigstens teilweise die abgeklappten Randabschnitte der Trägerplatte und die Seitenflächen der Wärmeleitplatte umfassen, um ein per se eigensteifes und selbsttragendes Verbundbauelement zu erhalten.

Dann bilden die abgeklappten Randabschnitte der Trägerplatte die Schenkel aus, welche die Seitenflächen der Wärmeleitplatte umgreifen.

Vorteilhaft bei diesem Verfahren ist, dass die Einschnitte in der Trägerplatte auf einfache Weise und insbesondere in einer Aufspannung der Trägerplatte zusammen mit der in der Trägerplatte eventuell herzustellenden Nut fertigbar sind. Mithin müssen die die Seitenflächen der Wärmeleitplatte umgreifenden Randabschnitte (Schenkel) nicht als separate Bauteile hergestellt werden, was die Herstellung des Verbundbauelements sehr einfach und kostengünstig macht. Besonders bevorzugt wird eine Trägerplatte in Sandwichbauweise verwendet, welche eine Schichtung aus wenigstens einer außen liegenden Außenschicht und einer innen liegenden Innenschicht aufweist, wobei die Einschnitte in der Trägerplatte derart gefertigt werden, dass wenigstens ein Teil der Innenschicht und, bei Vorliegen von zwei Außenschichten, auch eine der Außenschichten abgetragen wird, aber die oder die andere Außenschicht der beiden Außenschichten derart bestehen bleibt, dass die bestehende Außenschicht die materielle und elastisch biegbare Verbindung zwischen den Randabschnitten und dem Grundkörper ausbildet.

Dabei kann als Trägerplatte beispielweise eine Gipskartonplatte, welche eine Innenschicht beinhaltend Gips mit oder ohne Faserverstärkung und wenigstens eine Außenschicht beinhaltend eine Folie oder Kartonage umfasst, oder eine Platte verwendet werden, die eine Innenschicht beinhaltend einen geschäumten Kunststoff wie Polystyrol oder Polyurethan und wenigstens eine Außenschicht beinhaltend eine Folie oder Kartonage umfasst. Als Trägerplatte kommen daher alle Platten in Sandwichbausweise mit Außenschicht und diese kontaktierender Innenschicht bzw. mit zwei Außenschichten und dazwischen angeordneter und kontaktierender Innenschicht in Frage.

Wenn daher die bevorzugt dreieckförmigen Einschnitte in der Trägerplatte gefertigt sind, ist wegen des dort lokalen Verlusts der einen eventuell vorhandenen Außenschicht und dem zusätzlichen Materialverlust in der Innenschicht die Biegesteifigkeit der Trägerplatte in einer Richtung relativ gering, in welcher die als künftige Schenkel dienenden Randabschnitte gegenüber einem Grundkörper der Trägerplatte abgeklappt werden. Die Randabschnitte der Trägerplatte werden nach dem Fräsen der dreieckförmigen Einschnitte dann im Wesentlichen nur noch durch die von Anfang an einzige Außenschicht bzw. die andere, noch verbliebene Außenschicht am Grundkörper gehalten und können dann leicht abgebogen werden.

Durch die in den Unteransprüchen aufgeführten Maßnahmen sind vorteilhafte Weiterbildungen und Verbesserungen der in Anspruch 1 angegebenen Erfindung möglich.

Bevorzugt weist das Verbundbauelement Verbindungsmittel zur direkten oder indirekten Verbindung an dem Fußboden, der Wand oder der Decke des Gebäudes auf. Mit "indirekter Verbindung" ist gemeint, dass beispielsweise eine Befestigungsschiene oder -platte vorgesehen sein kann, welche einerseits mit dem Fußboden, der Wand oder der Decke und andererseits über die Verbindungsmittel mit dem Verbundbauelement verbunden ist. Eine solche Befestigungsschiene oder -platte soll allerdings nicht zu einer Versteifung des per se eigensteifen Verbundbauelements beitragen. Demgegenüber ist das Verbundbauelement bei einer "direkten Verbindung" über die Verbindungsmittel direkt mit der Wand, der Decke oder dem Fußboden des Gebäudes verbunden. Als Verbindungsmittel kommen insbesondere Schrauben, Stifte, Winkeleisen, Haken, Anker oder dergleichen in Frage.

Grundsätzlich können die Verbindungsmittel an einer beliebigen Stelle des Verbundbauelements angreifen, insbesondere aber an der Trägerplatte des Verbundbauelements, wobei die Trägerplatte beispielsweise Aufnahmen für die Verbindungsmittel aufweist, beispielsweise in Form von in der Trägerplatte aufgenommenen Gewindeeinsätzen für Schrauben. Alternativ können auch an der Wand, Decke oder am Fußboden befestigte Halter an dem Verbundbauelement, insbesondere an den Schenkeln der Trägerplatte angreifen.

Besonders bevorzugt ist eine von der Trägerplatte weg weisende Außenfläche der Wärmeleitplatte mit wenigstens einem diese Außenfläche kontaktierenden Dekormittel versehen, beispielsweise in Form einer in Bezug zu dem Verbundbauelement separaten Dekorplatte, einer Putz- oder Farbschicht oder einer sonstigen Beschichtung, welche erwünschte optische Effekte zu erzeugen vermag, aber den Wärmeübergang von der Wärmeleitplatte in den Raum bzw. vom Raum in die Wärmeleitplatte nicht maßgeblich behindert.

Besonders bevorzugt sind die Enden der Schenkel gegenüber der von der Trägerplatte weg weisenden Außenfläche der Wärmeleitplatte ein Stück weit zurück versetzt. Dadurch können größere Toleranzen bei der Fertigung der Trägerplatte zugelassen werden, um zu gewährleisten, dass wegen eines guten Wärmeübergangs die Dekormittel wie eine Dekorplatte die Außenfläche der Wärmeleitplatte eben und komplett kontaktieren kann.

Besonders bevorzugt weist die Trägerplatte eine höhere Material- und/oder Formsteifigkeit auf als die Wärmeleitplatte. Unter ,Materialsteifigkeit' ist dabei die aus dem Material und unter "Formsteifigkeit' die aus der Geometrie herrührende Steifigkeit zu verstehen. Dann kann die Wärmeleitplatte hauptsächlich hinsichtlich ihrer Wärmeübergangs- und Wärmeleiteigenschaften konzipiert werden und insbesondere auch das Graphitexpandat eine geringe Dichte aufweisen, ohne dass die Steifigkeit des Verbundbauelements dabei zu gering wird.

Besonders bevorzugt beinhaltet das Material der Trägerplatte einen geschäumten Kunststoff wie Polystyrol oder Polyurethan. Alternativ kann die Trägerplatte durch wenigstens eine Platte aus Gipskarton mit oder ohne Faserverstärkung gebildet werden oder eine solche Platte beinhalten.

Weiterhin kann den stoffschlüssig miteinander verbundenen Kontaktflächen der Trägerplatte und der Wärmeleitplatte wenigstens abschnittsweise eine wärmeleitende Schicht zwischengeordnet sein. Dabei kann die wärmeleitende Schicht aus Graphitexpandat bestehen oder wenigstens eine Graphitexpandat enthaltende Folie aufweisen. Weiterhin kann die Wärmeleitplatte eine Nut und die Trägerplatte ebenfalls eine Nut aufweisen, in welcher jeweils ein Teil des Querschnitts des wenigstens einen Rohrs aufgenommen ist. Dabei kann die wärmeleitende, Graphitexpandat beinhaltende Schicht wenigstens einen Teil der Rohroberfläche des Rohrs kontaktieren, der Nutoberfläche der Nut der Trägerplatte und der Rohroberfläche des Rohrs zwischengeordnet sein, und, senkrecht zur Längserstreckung des Rohrs gesehen, mit wenigstens einem Kontaktabschnitt aus der Nut der Trägerplatte herausragen, wobei der wenigstens eine Kontaktabschnitt der Graphitexpandat beinhaltenden, wärmeleitenden Schicht die Wärmeleitplatte kontaktiert.

Damit findet ein Wärmeübergang vom flüssigen Wärmeträger auf das Rohr und von der Rohroberfläche auf die Graphitexpandat beinhaltende, wärmeleitende Schicht und von dort auf die Wärmeleitplatte statt. Von der Wärmeleitplatte kann dann entweder direkt oder über aus optischen Gründen anzubringende Dekormittel wie beispielsweise eine Dekorplatte ein Wärmeübergang in den zu temperierenden Raum erfolgen.

Weil bevorzugt zum einen das Rohr mit einem Teil seines Querschnitts in der Nut der Trägerplatte und mit einem weiteren Teil seines Querschnitts in der weiteren Nut der Grahitexpandat enthaltenden Wärmeleitplatte aufgenommen ist bzw. weil bevorzugt die Nut in der Trägerplatte und die Nut in der Wärmeleitplatte derartige Dimensionen aufweisen, dass das Rohr mit seiner Rohroberfläche einerseits die wärmeleitende Schicht und andererseits die Nutoberfläche der weiteren Nut der Wärmeleitplatte kontaktiert, ist das Rohr lückenlos bzw. ohne Ausbildung von Hohlräumen zwischen der Trägerplatte und der Wärmeleitplatte aufgenommen bzw. gehalten, was einen guten Wärmeübergang bedingt. Weiterhin sorgt die Graphitexpandat enthaltende wärmeleitende Schicht bzw. deren Anordnung zwischen der Nutoberfläche der Nut in der Trägerplatte und der Rohroberfläche dafür, dass das Rohr vollständig von Graphitexpandat ummantelt wird, insbesondere im Bereich seines in der Nut der Trägerplatte gehaltenen Teils seines Querschnitts, damit der in der Nut der Trägerplatte angeordnete Rohrbogen bzw. Teil des Querschnitts des Rohrs die Wärme von der Rohroberfläche in die wärmeleitende Schicht, von dort in den Kontaktabschnitt und von diesem in die den Kontaktabschnitt kontaktierende Wärmeleitplatte ableiten kann. Dadurch wird die Wärmeleitung bzw. der Wärmeübergang vom Rohr in die Wärmeleitplatte wesentlich verbessert. Insgesamt ergibt sich bei dieser Ausführung des Verbundbauelements ein sehr günstiger Wärmeübergang bzw. eine sehr günstige Wärmeleitung.

Besonders bevorzugt weisen die Nut in der Trägerplatte und die weitere Nut in der Wärmeleitplatte jeweils einen im Wesentlichen halbkreisförmigen Querschnitt aufweisen. Solche halbkreisförmigen Querschnitte sind in der Regel einfach herzustellen. Alternativ kann der Querschnitt der einen Nut zugunsten des Querschnitts der anderen Nut auch etwas kleiner ausfallen. Wesentlich ist, dass das wenigstens eine Rohr in den Nuten im Querschnitt gesehen im Wesentlichen lückenlos aufgenommen ist.

Die Erfindung betrifft auch eine Fußboden-, Wand- oder Deckenklimatisierungsvorrichtung für ein Gebäude, beinhaltend wenigstens ein oben beschriebenes Verbundbauelement zum Heizen oder Kühlen eines Raumes.

Das Verbundbauelement ist bevorzugt plattenförmig, wobei mehrere solcher Verbundbauelemente jeweils als Baueinheit in Serien- und/oder Parallelschaltung miteinander kombiniert werden können, um einen Raum ausreichend zu klimatisieren. In diesem Fall ragen die Rohrenden der Rohre aus den Verbundbauelementen stirnseitig ein Stück weit heraus, um sie mit Hilfe von fittings, Rohrbögen oder flexiblen Schläuchen an Rohrenden benachbarter Verbundbauelemente anschließen zu können.

Dem Fachmann ist klar, dass anstatt eines auch mehrere, gegenläufig oder gleichläufig von dem flüssigen Wärmeträger durchflossene Rohre in einem solchen Verbundbauelement angeordnet sein können.

Die genaue Funktionsweise des erfindungsgemäßen Verbundelements wird durch die folgende Beschreibung eines Ausführungsbeispiels deutlich.

### Zeichnung

In der Zeichnung zeigt
- Fig.1: eine nicht maßstäbliche Querschnittsdarstellung einer bevorzugten Ausführungsform eines Verbundbauelements gemäß der Erfindung;
- Fig.2: eine nicht maßstäbliche Querschnittsdarstellung einer Trägerplatte des Verbundbauelements von Fig.1 bei seiner Herstellung.

### Beschreibung des Ausführungsbeispiels

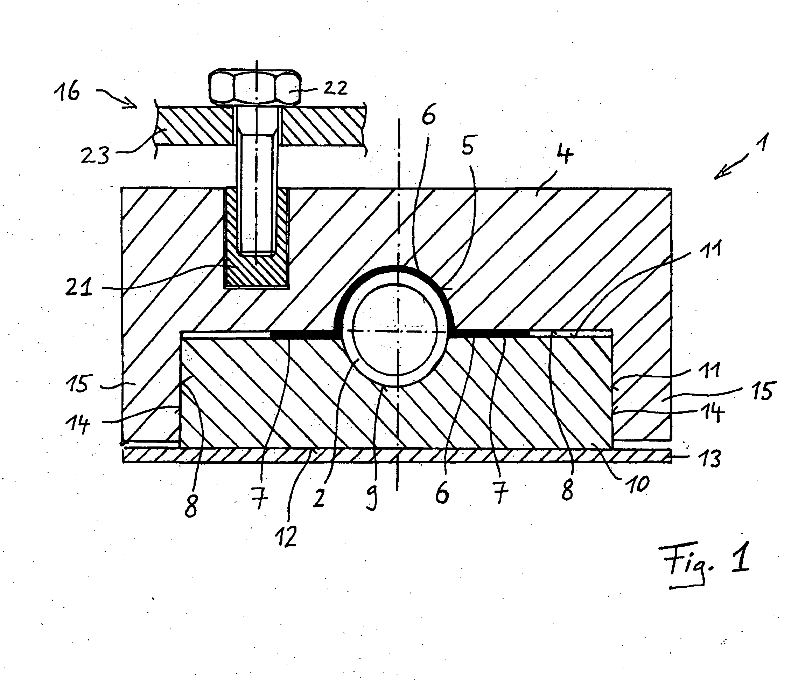

Ein in Fig.1 im Querschnitt aus Anschauungsgründen nicht maßstäblich gezeigtes Verbundbauelement 1 für eine Fußboden-, Wand- oder Deckenklimatisierungsvorrichtung eines Gebäudes ist bevorzugt plattenförmig ausgeführt und in eine Reihe weiterer Verbundbauelemente in Serien- oder Parallelschaltung geschaltet, jeweils bezogen auf den Durchfluss eines flüssigen Wärmeträgers.

Das Verbundbauelement 1 weist bevorzugt einen rechteckförmigen Querschnitt auf und ist auch senkrecht zur Plattenebene gesehen ebenfalls bevorzugt rechteckförmig. Das Verbundbauelement 1 beinhaltet wenigstens ein zum Durchfluss eines flüssigen Wärmeträgers vorgesehenes Rohr 2, welches sich beispielsweise parallel zu den äußeren Seitenflächen des Verbundbauelements 1 erstreckt und in Bezug zu diesen beispielsweise zentrisch angeordnet ist. Anstatt eines Rohres 2 können selbstverständlich auch mehrere Rohre im Inneren des Verbundbauelements 1 angeordnet oder eingebettet sein, beispielsweise parallel zueinander und gleichläufig oder gegenläufig durchflossen. Alternativ können auch ein oder mehrere Rohre 2 mäanderförmig im Inneren des Verbundbauelements 1 angeordnet sein. Gemeinsam ist allen möglichen Ausführungsformen, dass die Enden des Rohres 2 oder der Rohre jeweils eine Anschlussmöglichkeit als Zulauf oder Rücklauf für einen flüssigen Wärmeträger aufweisen, von dem sie durchflossen werden.

Das Verbundbauelement 1 beinhaltet weiterhin wenigstens eine Trägerplatte 4, die aus einem nicht Grahitexpandat enthaltenden Material besteht. Besonders bevorzugt wird die Trägerplatte 4 aus einer Platte aus Gipskarton gebildet, mit oder ohne Faserverstärkung. Die Trägerplatte 4 weist eine Nut 5 auf, in welcher das Rohr 2 wenigstens teilweise aufgenommen ist. Der Querschnitt der Nut 5 in der Trägerplatte 4 ist bevorzugt im Wesentlichen halbkreisförmig, wobei der Durchmesser des den Halbkreisquerschnitt bildenden Halbkreises etwas größer als der Außendurchmesser des Rohres 2 ist, weil der Rohraußenfläche des Rohres 2 und der Nutoberfläche der Nut 5 in der Trägerplatte 4 noch eine wärmeleitende, Graphitexpandat enthaltende Schicht 6 zwischengeordnet ist. Diese wärmeleitende Schicht 6 besteht bevorzugt aus Graphitexpandat, insbesondere aus einer Folie aus Grahitexpandat welche in die Nut 5 der Trägerplatte 4 eingelegt und derart zugeschnitten ist, dass ihr Rand als Kontaktabschnitt 7 beidseitig über den Rand der Nut 5 hinausragt, um an der ebenen Kontaktfläche 8 der Trägerplatte 4 kontaktierend anzuliegen. Senkrecht zur Längserstreckung des Rohres 2 gesehen ragt daher die Folie 6 aus Graphitexpandat mit ihrem Kontaktabschnitt 7 aus der Nut 5 der Trägerplatte 4 bevorzugt nur ein Stück weit heraus. Die Folie 6 aus Graphitexpandat umschlingt dadurch im Querschnitt gesehen den in der Nut 5 der Trägerplatte 4 angeordneten etwa halbkreisförmigen Rohrbogen des Rohrs 2 an dessen Rohraußenfläche.

Wie aus Fig.1 hervorgeht, ist das Rohr 2 mit einem Teil in der Nut 5 der Trägerplatte 4 und mit einem weiteren Teil in einer weiteren Nut 9 einer bevorzugt komplett aus Grahitexpandat bestehenden Wärmeleitplatte 10 aufgenommen. Besonders bevorzugt weisen die Nut 5 in der Trägerplatte 4 und die weitere Nut 9 in der Wärmeleitplatte 10 jeweils einen im Wesentlichen halbkreisförmigen Querschnitt auf, um jeweils einen etwa halbkreisförmigen Rohrbogen des Rohrs 2 aufzunehmen. Alternativ kann der Querschnitt der Nut 5 in der Trägerplatte 4 zugunsten des Querschnitts der weiteren Nut 9 in der Wärmeleitplatte 10 auch etwas kleiner ausfallen oder umgekehrt. Wesentlich ist, dass das Rohr 2 in den Nuten 5, 9 im Querschnitt gesehen im Wesentlichen lückenlos aufgenommen ist.

Die Wärmeleitplatte 10 ist mit ihrer Kontaktfläche 11 mit der Kontaktfläche 8 der Trägerplatte 4 beispielsweise stoffschlüssig, insbesondere durch Verklebung an dem Abschnitt direkt verbunden, an welchen kein Kontaktabschnitt 7 der Folie 6 aus Graphitexpandat vorhanden ist. Dabei wird der geringfügige Abstand der Kontaktflächen 8, 11, welcher sich durch den Kontaktabschnitt 7 der dünnen Folie 6 ergibt, bevorzugt mit Klebemittel verfüllt, so dass es in jedem Fall auch in diesem Abschnitt zur einer direkten Verklebung der Kontaktflächen 8, 11 kommt. An dem Abschnitt der Kontaktflächen 8, 11, an denen der Kontaktabschnitt 7 der Folie 6 aus Graphitexpandat zwischengeordnet ist, ist jeweils dieser Kontaktabschnitt 7 mit den Kontaktflächen 8, 11 verklebt, wodurch die Kontaktflächen 8, 11 miteinander indirekt stoffschlüssig verbunden sind.

Anstatt sich mit ihrem Kontaktabschnitt 7 nur ein Stück weit über den Rand der Nut 5 der Trägerplatte 4 seitlich hinaus zu erstrecken, kann sich die Folie 6 aus Graphitexpandat auch weiter, insbesondere über die gesamte Kontaktfläche 8 der Trägerplatte 4 mit der Kontaktfläche 11 der Wärmeleitplatte 10 erstrecken, oder eben nur über einen Teil von dieser.

Die Herstellung von expaniertem Graphit oder Graphitexpandat ist beispielsweise aus US-A 3 404 061 bekannt. Für die Herstellung von expandiertem Graphit werden Graphiteinlagerungsverbindungen bzw. Graphitsalze, z. B. Graphithydrogensulfat oder Graphitnitrat, schockartig erhitzt. Dabei vergrößert sich das Volumen der Graphitpartikel um den Faktor 200 bis 400 und die Schüttdichte sinkt auf 2 bis 20 g/l. Das so erhaltene sog. Graphitexpandat besteht aus wurm- oder ziehharmonikaförmigen Aggregaten. Wird der vollständig expandierte Graphit unter gerichteter Einwirkung eines Druckes kompaktiert, so ordnen sich die Schichtebenen des Graphits bevorzugt senkrecht zur Einwirkungsrichtung des Druckes an, wobei sich die einzelnen Aggregate untereinander verhaken. Dadurch lassen sich ohne Binderzusatz selbsttragende flächige Gebilde, z. B. Bahnen oder für den vorliegenden Einsatzzweck Wärmeleitplatten und Folien aus Graphitexpandat herstellen.

Aufgrund der gerichteten Einwirkung des Drucks während der Kompaktierung des Graphitexpandats weist eine Folie aus Graphitexpandat eine strukturelle Anisotropie auf. Wegen der Vorzugsorientierung der Graphitschichtebenen parallel zur Wärmeleitplatten- bzw. Folienfläche ist in der Wärmeleitplatte 10 bzw. Folie 6 aus Graphitexpandat die Wärmeleitung parallel zur flächigen Ausdehnung bevorzugt gegenüber der Wärmeleitung senkrecht zur Wärmeleitplatten- bzw. Folienfläche. Die Wärmeleitfähigkeit der Wärmeleitplatte 10 bzw. Folie 6 aus Graphitexpandat beträgt in der Richtung parallel zur Folienfläche ungefähr 150 W/m*K und in der Richtung senkrecht zur Plattenfläche 5 W/m*K. Die Wärmeleitfähigkeit parallel zur Wärmeleitplatten- bzw. Folienfläche ist also ca. dreißig mal größer als senkrecht zur Fläche. Das Verhältnis der Wärmeleitfähigkeit parallel zur Wärmeleitplatten- bzw. Folienfläche zur Wärmeleitfähigkeit senkrecht zur Wärmeleitplatten- bzw. Folienfläche ist um so größer, je stärker die Verdichtung des expandierten Graphits, also je größer die Dichte des expandierten Graphits.

Bei der bekannten Verfahrensweise zur Herstellung von Platten bzw. Folien aus Graphitexpandat werden die expandierten Graphitpartikel über einen Vorverdichter und Walzenpaare, in der Regel zwei Walzenpaare geführt, wobei das Expandat dem Vorverdichter kontinuierlich zugeführt wird. Zwischen den Walzenpaaren sind Aufheizzonen angeordnet, in denen das Material erhitzt wird. Die Temperaturen in diesen Aufheizbereichen liegen bei ca. 600 ° C und dienen dazu, die Luft aus dem dichter werdenden Material zu verdrängen. Sowohl im Vorverdichter als auch in den Walzenpaaren erfährt das Graphitexpandat eine gerichtete Einwirkung von Druck, der eine parallele Orientierung der Schichtebenen in den Graphitpartikeln bewirkt. Mit diesem Verfahren ist es möglich, sehr dünne Folien aus Graphitexpandat zu erhalten. Das Graphitexpandat der Folie 6 kann eine höhere Dichte aufweisen als das Graphitexpandat der Wärmeleitplatte 10.

Mit dem beschriebenen Aufbau des Verbundbauelements 1 findet ein Wärmeübergang vom flüssigen Wärmeträger auf das Rohr 2 und von der Rohraußenfläche auf die Folie 6 aus Graphitexpandat und von dort über den Kontaktabschnitt 7 auf die Kontaktfläche 11 der Wärmeleitplatte 10 und damit auf die Wärmeleitplatte 10 statt. Dieser Wärmeübergang wird durch die teilweise Umschlingung des Rohres 2 durch die Folie 6 aus Graphitexpandat begünstigt. Parallel hierzu kann ein Wärmeübergang von der Rohraußenfläche auf die Wärmeleitplatte 10 durch deren direkten Kontakt mit der Nutoberfläche der Nut 9 in der Wärmeleitplatte 10 erfolgen.

Von der Wärmeleitplatte 10 findet dann entweder direkt oder über eine aus optischen Gründen anzubringende Verkleidung wie beispielsweise eine an einer Außenfläche 12 der Wärmeleitplatte 10 direkt angebrachte Dekorplatte 13 ein Wärmeübergang in den zu temperierenden Raum des Gebäudes statt.

Die Nut 5 in der Trägerplatte 4 und die weitere Nut 9 in der Wärmeleitplatte 10 weisen bevorzugt derartige Dimensionen auf, dass das Rohr 2 mit seiner Rohraußenfläche einerseits die Folie 6 aus Graphitexpandat und diese Folie 6 die Oberfläche der Nut 5 in der Trägerplatte und andererseits die Oberfläche der weiteren Nut 9 in der Wärmeleitplatte 10 unter leichter oder großer Pressung kontaktiert, insbesondere derart, dass sich jeweils ein Kraftschluss zwischen dem Rohr 2 und der weiteren Nut 9 der Wärmeleitplatte 10 einerseits sowie dem Rohr 2, der Folie 6 und der Nut 5 in der Trägerplatte 4 andererseits ausbilden kann.

Besonders bevorzugt umgreift die Trägerplatte 4 die Wärmeleitplatte 10 an deren Seitenflächen 14, wobei die Trägerplatte 4 einen U-förmigen Querschnitt mit Schenkeln 15 aufweist, welche die Seitenflächen 14 der Wärmeleitplatte 10 kontaktieren. Dabei kann sich der Kontaktabschnitt 7 der Folie 6 aus Graphitexpandat bis hin zu den Enden der Seitenflächen 14 der Wärmeleitplatte 10 bzw. bis zu den Enden der Schenkel 15 der Trägerplatte 4 erstrecken, so dass in diesem Fall den Seitenflächen 14 der Wärmeleitplatte 10 und den Innenflächen der Schenkel 15 der Trägerplatte 4 der Kontaktabschnitt 7 der Folie 6 aus Graphitexpandat zwischengeordnet ist. In diesem Fall erstreckt sich daher der Kontaktabschnitt 7 von den Rändern der Nut 5 der Trägerplatte 4 um die am Beginn der Schenkel 15 ausgebildeten Ecken herum. Bevorzugt sind dabei auch die Innenflächen der Schenkel 15 der Trägerplatte 4, welche ebenfalls Bestandteil der Kontaktfläche 8 sind, mit der dort anliegenden Folie 6 aus Graphitexpandat und diese mit der Kontaktfläche 11 der Wärmeleitplatte 10 verklebt, wobei diese Kontaktfläche 11 dann auch die Seitenflächen 14 der Wärmeleitplatte 10 umfasst.

Wie bereits oben ausgeführt, ist die von der Trägerplatte 4 weg weisende Außenfläche 12 der Wärmeleitplatte 10 bevorzugt mit einer diese Außenfläche 12 kontaktierenden Dekorplatte 13 versehen. Dabei sind die Enden der Schenkel 15 der Trägerplatte 4 gegenüber der von der Trägerplatte 10 weg weisenden Außenfläche 12 der Wärmeleitplatte 10 ein Stück weit zurück versetzt. Dadurch können größere Toleranzen bei der Fertigung der Trägerplatte 4 zugelassen werden, um zu gewährleisten, dass wegen eines guten Wärmeübergangs die Dekorplatte 13 die Außenfläche 12 der Wärmeleitplatte 10 eben und komplett kontaktieren kann. Um eine gute Steifigkeit des Verbund bauelements 1 zu gewährleisten, weist die Trägerplatte 4 bevorzugt eine höhere Materialsteifigkeit und/oder Formsteifigkeit als die Wärmeleitplatte 10 auf.

Das Verbundbauelement 1 kann bevorzugt an der Trägerplatte 4 angreifende Verbindungsmittel 16 wie Schrauben, Stifte, Winkeleisen, Haken, Anker oder andere Verbindungsmittel 16 zur direkten oder indirekten Befestigung des Verbundbauelements 1 an einem Fußboden, einer Wand oder einer Decke eines Gebäudes bzw. Aufnahmen für solche Verbindungsmittel 16 aufweisen. Wesentlich ist, dass keine weiteren Maßnahmen zur Versteifung des Verbundbauelements 1 vorgenommen werden, sondern dass dieses als per se eigensteife oder selbsttragende Struktur an der Wand oder Decke befestigbar ist.

Im Ausführungsbeispiel sind in der Trägerplatte 4 beispielsweise metallene Gewindeeinsätze 21 für die Schäfte von Schrauben 22 aufgenommen, welche mit ihrem Schraubenkopf an einer beispielsweise mit einer Raumdecke verbundenen Befestigungsschiene 23 gekontert sind. Alternativ hierzu oder zusätzlich könnten beispielsweise auch Halter an der in den Raum weisenden Stirnfläche der Schenkel 15 angreifen, welche andererseits an der Raumdecke befestigt sind. In Fig.1 ist von mehreren solcher Schrauben 22 aus Maßstabsgründen lediglich eine gezeigt. Die Trägerplatte 4 bildet zugleich eine Isolierung zur Decke hin, d.h. dass sie einen Wärmeübergang von der Wärmeleitplatte 10 auf die DeckelWand bzw. in umgekehrter Richtung behindert, so dass im Falle einer Deckenheizung die Wärme über die Dekorplatte 13 an das Innere das Raumes abgegeben wird.

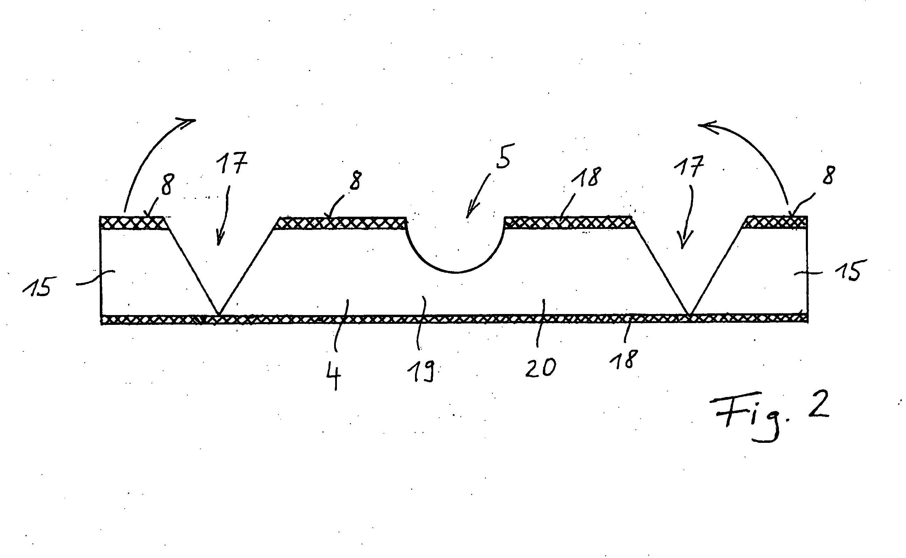

Die Herstellung des Verbundbauelements 1 beinhaltet bevorzugt die folgenden Schritte, welche durch Fig.2 veranschaulicht werden:
Die Trägerplatte 4 wird insbesondere aus einer Platte in Sandwichbauweise, z.B. aus Gipskarton hergestellt, in deren Kontaktfläche 8 die im Querschnitt gesehen im Wesentlichen halbkreisförmige Nut 5 für das Rohr 2 gefertigt wird, beispielsweise durch Fräsen. Dann werden bevorzugt bereits die Aufnahmen, hier die Gewindeeinsätze 21 für die Schrauben 22 bereits in die Trägerplatte 4 eingesetzt (In Fig.2 nicht dargestellt).

Zuvor, danach oder gleichzeitig werden im Querschnitt gesehen etwa dreieckige, symmetrisch zur Mitte angeordnete Einschnitte 17 in der Kontaktfläche 8 der Trägerplatte 4 gefertigt, um dort später die Schenkel 15 der Trägerplatte 4 durch Biegen oder Abkanten herzustellen. Der horizontale Abstand der Mitte der beiden Einschnitte 17 in der Trägerplatte 4 ist dabei so groß wie die Breite der Wärmeleitplatte 10. Dieser Zustand der Trägerplatte 4 ist in Fig.2 gezeigt.

Wie aus Fig.2 hervorgeht, weist die Trägerplatte 4 aus Gipskarton eine typische Schichtung aus einer Außenschicht 18 oder hier bevorzugt zwei außen liegenden Außenschichten 18 aus Karton und einer innen liegenden Innenschicht 19 aus Gips auf. Wenn daher die dreieckförmigen Einschnitte 17 in der Trägerplatte 4 gefertigt sind, ist wegen des dort lokalen Verlusts einer der beiden steiferen Außenschichten 18 aus Karton und dem zusätzlichen Materialverlust an Gips in der Innenschicht 19 die Biegesteifigkeit der Trägerplatte 4 in einer Richtung relativ gering, in welcher die als künftige Schenkel 15 dienenden Randabschnitte gegenüber einem Grundkörper 20 der Trägerplatte 4 nach oben abgeklappt werden, wie durch die Pfeile in Fig. 2 angedeutet ist. Die Randabschnitte bzw. Schenkel 15 der Trägerplatte 4 werden nach dem Fräsen der dreieckförmigen Einschnitte 17 dann im Wesentlichen nur noch durch die eine verbliebene Außenschicht 18 aus Karton am Grundkörper 20 gehalten und können leicht abgebogen werden.

Für die Trägerplatte kann dabei jegliche Platte in Sandwichbauweise verwendet werden, mit einer oder zwei Außenschichten 18 und einer oder mehreren Innenschichten 19. Wesentlich ist dabei nur, dass eine Außenschicht 18 noch eine materielle, biegbare Verbindung zwischen dem Grundkörper 20 und den Schenkeln 15 gewährleistet, wenn die Innenschicht 19 und eine eventuell vorhandene weitere Außenschicht 18 im Bereich der Einschnitte 17 abgetragen sind. Beispielsweise kommt als Trägerplatte 4 auch eine Platte in Sandwichbauweise in Frage, bei welcher die Innenschicht 19 aus Polyurethan-Hartschaum besteht und die Außenschicht 18 oder beide Außenschichten 18 aus einer Kartonage oder einer Folie, insbesondere einer Aluminium- oder Dekorfolie.

In einem weiteren Schritt wird dann die Folie 6 aus Graphitexpandat aufgrund ihrer elastischen Eigenschaften derart in die Nut 5 in der Trägerplatte 4 eingelegt bzw. eingeformt, dass die Folie 6 die Nutoberfläche faltenlos kontaktiert und die Ränder der Folie 6 über den Rand der Nut 5 seitlich hinausragen, einen ebenen und faltenlosen Kontaktabschnitt 7 mit der Wärmeleitplatte 10 ausbilden können. Dabei wird die Folie 6 beidseitig mit Kleber versehen. Sodann wird auch in der Wärmeleitplatte 10 die weitere Nut 9 mit im Wesentlichen halbkreisförmigem Querschnitt beispielsweise durch Fräsen gefertigt.

Dann wird das Rohr 2 in die bereits mit der Folie 6 versehene Nut 5 in der Trägerplatte 4 eingelegt. In einem nächsten Schritt werden die zueinander weisenden Kontaktflächen 8, 11, insbesondere auch die Innenflächen der Schenkel 15 und die Seitenflächen 14 der Wärmeleitplatte 10 sowie der Kontaktabschnitt 7 mit Klebstoff versehen. Vor dem Verkleben der Wärmeleitplatte 10 mit der Trägerplatte 4 können die Schenkel 15 sich noch in ebenem Zustand gemäß Fig.2 befinden oder bereits abgeklappt sein.

Sodann wird die Wärmeleitplatte 10 auf die Trägerplatte 4 aufgelegt, wobei das noch mit seinem Rohrbogen mit im Wesentlichen halbkreisförmigen Querschnitt von der Kontaktfläche 8 aus der Trägerplatte 4 heraus ragende Rohr 2 in der weiteren Nut 9 der Wärmeleitplatte 10 bzw. in deren Nutoberfläche zum Anliegen kommt und zugleich der Kontaktabschnitt 7 der Folie 6 den Kontaktflächen 8, 11 zwischengeordnet wird. Da die Folie 6 relativ dünn ist, kann die Klebstoffschicht auch die Anteile der zueinander weisenden Kontaktflächen 8, 11 erreichen, welche nicht vom Kontaktabschnitt 7 der Folie 6 bedeckt sind. Falls noch nicht geschehen, können dann die Schenkel 15, wie in Fig.2 durch die Pfeile angedeutet, abgeklappt und mit den Seitenflächen 14 der Wärmeleitplatte 10 verklebt werden.

Durch das beschriebene Herstellverfahren ergibt sich wegen des Umgriffs der Schenkel 15 der Trägerplatte 4 in Kombination mit dem dreiflächigen Stoffschluss (Schenkel 15, Grundkörper 20, Schenkel 15) zwischen Trägerplatte 4 und Wärmeplatte 10 ein sehr steifes bzw. eigensteifes bzw. selbsttragendes Verbundelement 1. Weiterhin ist das Herstellverfahren des Verbundelements 1 sehr einfach und auch kostengünstig durchführbar.

### Bezugszeichenliste

- 1: Verbundbauelement
- 2: Rohr
- 4: Trägerplatte
- 5: Nut
- 6: Folie
- 7: Kontaktabschnitt
- 8: Kontaktfläche
- 9: Nut
- 10: Wärmeleitplatte
- 11: Kontaktfläche
- 12: Außenfläche
- 13: Dekorplatte
- 14: Seitenfläche
- 15: Schenkel
- 16: Verbindungsmittel
- 17: Einschnitte
- 18: Außenschicht
- 19: Innenschicht
- 20: Grundkörper
- 21: Gewindeeinsätze
- 22: Schraube
- 23: Befestigungsschiene

## Patentansprüche

1. Verbundbauelement (1) für eine Fußboden-, Wand- oder Deckenklimatisierungsvorrichtung eines Gebäudes, beinhaltend wenigstens ein zum Durchfluss eines flüssigen Wärmeträgers vorgesehenes Rohr (2), welches mit wenigstens einem Teil seines Querschnitts in wenigstens einer Grahitexpandat enthaltenden Wärmeleitplatte (10) aufgenommen ist, wobei es aus der wenigstens einen Wärmeleitplatte (10) und wenigstens einer diese tragenden, aus einem oder mehreren nicht Grahitexpandat enthaltenden Materialien bestehenden Trägerplatte (4) ausgeführt ist, wobei die Trägerplatte (4) einen U-förmigen Querschnitt mit Schenkeln (15) aufweist, welche die Wärmeleitplatte (10) an deren Seitenflächen (14) wenigstens teilweise umgreifen und die wenigstens eine Wärmeleitplatte (10) und die wenigstens eine Trägerplatte (4) an Kontaktflächen (8, 11) miteinander verbunden sind, welche die Schenkel (15) der Trägerplatte (4) und die Seitenflächen (14) der Wärmeleitplatte (10) wenigstens teilweise umfassen, **dadurch gekennzeichnet, dass** das Verbundbauelement (i) als per se eigensteife und selbsttragende Struktur ausgeführt ist, nolem die Verbindung der wenigstens einen Wärmeleitplatte (10) und der wenigstens einen Trägerplatte (4) an den Kontaktflächen (8, 11) stoffschlüssig ist.

2. Verbundbauelement nach Anspruch 1, **dadurch gekennzeichnet, dass** es Verbindungsmittel (16) zur direkten oder indirekten Verbindung an einem Fußboden, einer Wand oder einer Decke eines Gebäudes aufweist.

3. Verbundbauelement nach Anspruch 2, **dadurch** gekennzeichnet, **dass** die Verbindungsmittel (16) an der Trägerplatte (4) angreifen.

4. Verbundbauelement nach Anspruch 3, **dadurch gekennzeichnet, dass** die Trägerplatte (4) Aufnahmen (21) für die Verbindungsmittel (16) aufweist.

5. Verbundbauelement nach einem der vorhergehenden Ansprüche, **dadurch gekennzeichnet, dass** eine von der Trägerplatte (4) weg weisende Außenfläche (12) der Wärmeleitplatte (10) mit wenigstens einem diese Außenfläche (12) kontaktierenden Dekormittel (13) versehen ist.

6. Verbundbauelement einem der vorhergehenden Ansprüche, **dadurch gekennzeichnet,** dass die Enden der Schenkel (15) gegenüber der von der Trägerplatte (4) weg weisenden Außenfläche (12) der Wärmeleitplatte (10) ein Stück weit zurück versetzt sind.

7. Verbundbauelement nach einem der vorhergehenden Ansprüche, **dadurch** gekennzeichnet, **dass** die Trägerplatte (4) eine höhere Material- und/oder Formsteifigkeit als die Wärmeleitplatte (10) aufweist.

8. Verbundbauelement nach einem der vorhergehenden Ansprüche, **dadurch gekennzeichnet, dass** die Trägerplatte (4) eine Sandwichbauweise aufweist, mit einer Innenschicht (19) und wenigstens einer Außenschicht (18) an wenigstens einer Außenfläche der Trägerplatte (4).

9. Verbundbauelement nach Anspruch 8, **dadurch gekennzeichnet, dass** die Außenschicht (18) im Vergleich zur Innenschicht (19) der Trägerplatte (4) eine geringere Dicke aufweist.

10. Verbundbauelement nach Anspruch 8 oder 9, **dadurch gekennzeichnet, dass** die Trägerplatte (4) eine Innenschicht (19) beinhaltend einen geschäumten Kunststoff wie Polystyrol oder Polyurethan und wenigstens eine Außenschicht (18) beinhaltend eine Folie oder Kartonage umfasst.

11. Verbundbauelement nach Anspruch 8 oder 9, **dadurch gekennzeichnet, dass** die Trägerplatte (4) eine Platte aus Gipskarton beinhaltet, welche eine Innenschicht (19) beinhaltend Gips mit oder ohne Faserverstärkung und wenigstens eine Außenschicht (18) beinhaltend eine Folie oder Kartonage umfasst.

12. Verbundbauelement nach einem der vorhergehenden Ansprüche, **dadurch** gekennzeichnet, **dass** den stoffschlüssig miteinander verbundenen Kontaktflächen (8, 11) der Trägerplatte (4) und der Wärmeleitplatte (10) wenigstens abschnittsweise eine wärmeleitende Schicht (6) zwischengeordnet ist.

13. Verbundbauelement nach Anspruch 12, **dadurch gekennzeichnet, dass** die wärmeleitende Schicht (6) aus Graphitexpandat besteht oder wenigstens eine Graphitexpandat enthaltende Folie aufweist.

14. Verbundbauelement nach Anspruch 13, **dadurch gekennzeichnet, dass** die Wärmeleitplatte (10) eine Nut (9) und die Trägerplatte (4) eine weitere Nut (5) aufweist, in welcher jeweils ein Teil des Querschnitts des wenigstens einen Rohrs (2) aufgenommen ist.

15. Verbundbauelement nach Anspruch 14, **dadurch gekennzeichnet, dass** die wärmeleitende, Graphitexpandat beinhaltende Schicht (6) wenigstens einen Teil der Rohroberfläche des Rohrs (2) kontaktiert, der Nutoberfläche der Nut (5) der Trägerplatte (4) und der Rohroberfläche des Rohrs (2) zwischengeordnet ist, und, senkrecht zur Längserstreckung des Rohrs (2) gesehen, mit wenigstens einem Kontaktabschnitt (7) aus der Nut (5) der Trägerplatte (4) herausragt, wobei der wenigstens eine Kontaktabschnitt (7) der Graphitexpandat beinhaltenden, wärmeleitenden Schicht (6) die Wärmeleitplatte (10) kontaktiert.

16. Verbundbauelement nach Anspruch 15, **dadurch gekennzeichnet, dass** die Nut (5) der Trägerplatte (4) und die weitere Nut (9) der Wärmeleitplatte (10) derartige Dimensionen aufweisen, dass das Rohr (2) mit seiner Rohroberfläche einerseits die wärmeleitende Schicht (6) und andererseits die Nutoberfläche der weiteren Nut (9) der Wärmeleitplatte (10) kontaktiert.

17. Fußboden-, Wand- oder Deckenklimatisierungsvorrichtung für ein Gebäude, beinhaltend wenigstens ein Verbundbauelement (1) nach wenigstens einem der vorhergehenden Ansprüche.

18. Verfahren zur Herstellung eines Verbundbauelements (1) für eine Fußboden-, Wand- oder Deckenklimatisierungsvorrichtung eines Gebäudes, beinhaltend wenigstens folgende Schritte:
a) Herstellen wenigstens einer ebenen Trägerplatte (4) aus einem oder mehreren nicht Graphitexpandat enthaltenden Materialien, gekennzeichnet durch folgende Schritte:
b) Fertigen von etwa dreieckförmigen Einschnitten (17) in einer Kontaktfläche (8) der Trägerplatte (4) mit einer zugeordneten Kontaktfläche (11) wenigstens einer Wärmeleitplatte (10), so dass zumindest zwei sich gegenüber liegende Randabschnitte (15) der Trägerplatte (4) durch die Einschnitte (17) von einem Grundkörper (20) zwar teilweise getrennt sind, aber noch eine materielle und elastisch biegbare Verbindung zwischen den Randabschnitten (15) und dem Grundkörper (20) vorhanden ist,
c) Fertigen wenigstens einer Nut (4) in dem Grundkörper (20) der Trägerplatte (4) für wenigstens einen Teil des Querschnitts eines zum Durchfluss eines flüssigen Wärmeträgers vorgesehenen Rohrs (2) gefertigt wird, und/oder Fertigen einer Nut (9) in der Wärmeleitplatte (10) für wenigstens einen Teil des Querschnitts eines zum Durchfluss eines flüssigen Wärmeträgers vorgesehenen Rohrs (2),
d) Abklappen der Randabschnitte (15) der Trägerplatte (4) gegenüber dem Grundkörper (20), um einen im Wesentlichen U-förmigen Querschnitt der Trägerplatte (4) zu erzeugen,
e) Einsetzen der Wärmeleitplatte (10) in den U-förmigen Querschnitt der Trägerplatte (4) derart, dass die abgeklappten Randabschnitte (15) der Trägerplatte die Wärmeleitplatte (10) an deren Seitenflächen (14) umgreifen, sich die Trägerplatte (4) und die Wärmeleitplatte (10) an den Kontaktflächen (8, 9) gegenseitig kontaktieren und das wenigstens eine Rohr in der Nut (4) der Trägerplatte (4) und/oder in der Nut (9) der Wärmeleitplatte (10) fixiert ist,
f) stoffschlüssiges Verbinden der Trägerplatte (4) und der Wärmeleitplatte (10) an den Kontaktflächen (8, 11), welche wenigstens teilweise die Randabschnitte (15) der Trägerplatte (4) und die Seitenflächen (14) der Wärmeleitplatte (10) umfassen, um ein per se eigensteifes und selbsttragendes Verbundbauelement (1) zu erhalten.

19. Verfahren nach Anspruch 18, **gekennzeichnet durch** Herstellen von Aufnahmen (21) in dem Verbundbauelement (1) für Verbindungsmittel (16) zum Verbinden des Verbundbauelements (1) mit dem Fußboden oder der Wand oder der Decke des Gebäudes.

20. Verfahren nach Anspruch 18 oder 19, **gekennzeichnet durch** Verwenden einer Trägerplatte (4) in Sandwichbauweise, welche eine Schichtung aus wenigstens einer außen liegenden Außenschicht (18) und einer innen liegenden Innenschicht (19) aufweist, und **durch** Fertigen der Einschnitte (17) in der Trägerplatte (4) derart, dass wenigstens ein Teil der Innenschicht (19) und, bei Vorliegen von zwei Außenschichten (18), auch eine der Außenschichten (18) abgetragen wird, aber die oder die andere Außenschicht (18) derart bestehen bleibt, dass die bestehende Außenschicht (18) die materielle und elastisch biegbare Verbindung zwischen den Randabschnitten (15) und dem Grundkörper (20) ausbildet.

21. Verfahren nach Anspruch 20, **gekennzeichnet durch** Verwenden einer Gipskartonplatte, welche eine Innenschicht (19) beinhaltend Gips mit oder ohne Faserverstärkung und wenigstens eine Außenschicht (18) beinhaltend eine Folie oder Kartonage umfasst, oder einer Platte, die eine Innenschicht (19) beinhaltend einen geschäumten Kunststoff wie Polystyrol oder Polyurethan und wenigstens eine Außenschicht (189 beinhaltend eine Folie oder Kartonage umfasst, als Trägerplatte (4).

## Claims

1. A structural composite element (1) for a floor, wall or ceiling temperature control device of a building, comprising
at least one tube (2) for conducting a liquid heat transfer medium which tube is received with at least a portion of its cross section in at least one heat transfer plate (10) including expanded graphite,
wherein the structural composite element (1) is provided from the at least one heat conductor plate (10) and at least one carrier plate (4) supporting the heat conductor plate and made from one or plural materials not including expanded graphite,
wherein the carrier plate (4) has a U-shaped cross section with arms (15) which reach at least partially about the heat conductor plate (10) at its lateral surfaces (14), and
the at least one heat conductor plate (10) and the at least one carrier plate (4) are connected with one another at contact surfaces (8, 11) which envelop the arms (15) of the carrier plate (4) and the lateral surfaces (14) of the heat conductor plate (10) at least partially,
**characterized in that** the structural composite element (1) is configured as a self-supporting structure with intrinsic stiffness, and
**in that** a connection of the at least one heat conductor plate (10) and the at least one carrier plate (4) is bonded at the contact surfaces (8, 11).

2. The structural composite element according to claim 1, **characterized in that** the structural composite element (1) includes connection devices (16) for directly or indirectly connecting with a floor, a wall or a ceiling of a housing.

3. The structural composite element according to claim 2, **characterized in that** the connection devices (16) engage the carrier plate (4).

4. The structural composite element according to claim 3, **characterized in that** the carrier plate (4) includes receivers (21) for the connection devices (16).

5. The structural composite element according to one of the preceding claims, **characterized in that** an outer surface (12) of the heat conductor plate (10) oriented away from the carrier plate (4) is provided with at least one decorative device (13) contacting the outer surface (12).

6. The structural composite element according to one of the preceding claims, **characterized in that** ends of the arms (15) are recessed relative to the outer surface (12) of the heat conductor plate (10) oriented away from the carrier plate (4).

7. The structural composite element (1) according to one of the preceding claims, **characterized in that** the carrier plate (4) has higher material and/or shape stiffness than the heat conductor plate (10).

8. The structural composite element according to one of the preceding claims, **characterized in that** the carrier plate (4) is configured in sandwich construction with an inner layer (19) and at least one outer layer (18) at least at one outer surface of the carrier plate (4).

9. The structural composite element according to claim 8, **characterized in that** the outer layer (18) has a smaller thickness compared to the inner layer (19) of the carrier plate (4).

10. The structural composite element according to claim 8 or 9, **characterized in that** the carrier plate (4) has an inner layer (19) including a foamed plastic material like polystyrene or polyurethane and at least one outer layer (18) including a foil or a cardboard.

11. The structural composite element (1) according to claim 8 or 9, **characterized in that** the carrier plate (4) includes a plate made from sheet rock which plate includes an inner layer (19) including gypsum with or without fiber reinforcement and at least one outer layer (18) including a foil or card board.

12. The structural composite element according to one of the preceding claims, **characterized in that** a heat conducting layer (6) is arranged at least in sections between the contact surfaces (8, 11) of the carrier plate (4) and the heat conducting plate (10) which contact surfaces are bonded together.

13. The structural composite element according to of the claim 12, **characterized in that** the heat conducting layer (6) is made from expanded graphite or includes at least a foil including expanded graphite.

14. The structural composite element (1) according to claim 13, **characterized in that** the heat conductor plate (10) includes a groove (9) and the carrier plate (4) includes another groove (5) in which a portion of the cross section of the at least one tube (2) is respectively received.

15. The structural composite element (1) according to claim 14, **characterized in that** the heat conducting layer (6) including expanded graphite contacts at least a portion of a tube surface of the tube (2), the heat conducting layer is arranged between a groove surface of the groove (5) of the carrier plate (4) and the tube surface of the tube (2) and protrudes from the groove (5) of the carrier plate (4) perpendicular to the longitudinal extension of the tube (2) with at least one contact section (7), wherein the at least one contact section (7) of the heat conducting layer (6) including expanded graphite contacts the heat conducting plate (10).

16. The structural composite element according to claim 15, **characterized in that** the groove (5) of the carrier plate (4) and the additional groove (9) of the heat conductor plate (10) have dimensions so that the tube (2) with its tube surface contacts on one side the heat conducting layer (6) and on another side contacts the groove surface of the additional groove (9) of the heat conductor plate (10).

17. A floor, wall or ceiling temperature control device for a building including at least one composite structural element (1) according to at least one of the preceding claims.

18. A method for producing a structural composite element (1) for a floor, wall or ceiling temperature control device of a building comprising at least the steps:
a) producing at least one planar carrier plate (4) from one or plural materials not including expanded graphite, **characterized by** the steps:
b) fabricating approximately triangular incisions (17) in a contact surface (8) of the carrier plate (4) with an associated contact surface (11) of at least one heat conducting plate (10) so that at least two opposite edge sections (15) of the carrier plate (4) are partially separated from a base element (20) through the incisions (17) but a material and elastically bendable connection is provided between edge sections (15) and a base element (20),
c) fabricating at least one groove (5) in the base element (20) of the carrier plate (4) for at least a portion of the cross section of a tube (2) provided for a flow through of a liquid heat transfer medium and/or fabricating a groove (9) in the heat transfer plate (10) for at least a portion of a cross section of the tube (2) that is provided for a flow through of a liquid heat transfer medium,
d) folding edge sections (15) of the carrier plate (4) relative to the base element (20) in order to generate an essentially U-shaped cross section of the carrier plate (4),
e) inserting the heat conducting plate (10) into the U-shaped cross section of the carrier plate (4) so that the folded edge sections (15) of the carrier plate reach around the heat conducting plate (10) at its lateral surfaces (14), so that the carrier plate (4) and the heat conducting plate (10) contact each other at contact surfaces (8, 11) and the at least one tube is fixated in the groove (5) of the carrier plate (4) and/or in the groove (9) of the heat conductor plate (10) is fixated,
f) bonding the carrier plate (4) and the heat conductor plate (10) at the contact surfaces (8, 11) which at least partially include the edge sections (15) of the carrier plate (4) and the side surfaces (14) of the heat conducting plate (10) in order to obtain a self-supporting structural composite element (1) that has intrinsic stiffness.

19. The method according to claim 18, **characterized by** fabricating receivers (21) in the structural composite element (1) for connection devices (16) for connecting the structural composite element (1) with a floor and/or a wall or a ceiling of the building.

20. The method according to claim 18 or 19, **characterized by** using a carrier plate (4) in sandwich construction which includes a layer arrangement including at least one external outer layer (18) and an internal inner layer (19) and by fabricating incisions (17) in the carrier plate (4) so that at least a portion of the inner layer (19) is removed and when there are two outer layers (18) also one of the outer layers (18) is removed, but the outer layer or the other outer layer (18) remains so that the remaining outer layer (18) forms the material and elastically bendable connection between the edge sections (15) and the base element (20).

21. The method according to claim 20, **characterized by** using a sheet rock plate which includes an inner layer (19) including gypsum with or without fiber reinforcement and at least one outer layer (18) including a foil or card board, or a plate including an inner layer (19) including a foamed plastic material like polystyrene or polyurethane and at least one outer layer (18) including a foil or card board wherein the plate is configured as a carrier plate (4).

## Revendications

1. Elément de construction composite (1) pour un dispositif de climatisation des sols, des murs ou des plafonds d'un bâtiment contenant au moins un tuyau (2) prévu pour l'écoulement d'un caloporteur fluide qui est logé avec au moins une partie de sa section dans au moins une plaque thermoconductrice qui contient du graphite expansé, cependant qu'il est réalisé par la plaque thermoconductrice qui existe au moins (10) et au moins une plaque porteuse (4) qui est constituée par un ou plusieurs matériaux qui ne contiennent pas de graphite expansé, cependant que la plaque porteuse (4) présente une section en forme d'U avec des montants (15) qui recouvrent au moins partiellement la plaque thermoconductrice (10) sur ses faces latérales (14) et la plaque thermoconductrice qui existe au moins (10) et la plaque porteuse qui existe au moins (4) sont reliées l'une à l'autre sur des faces de contact (8, 11) qui enserrent au moins partiellement les montants (15) de la plaque porteuse (4) et les faces latérales (14) de la plaque thermoconductrice (10), **caractérisé en ce que** l'élément de construction composite (1) est réalisé comme une structure à rigidité inhérente propre et autoporteuse lorsque la liaison d'au moins une plaque thermoconductrice (10) et de la plaque porteuse qui existe au moins (4) est une liaison de matières.

2. Elément de construction composite selon la revendication 1, **caractérisé en ce qu'**il présente des moyens de liaison (16) pour la liaison directe ou indirecte à un sol, un mur ou un plafond d'un bâtiment.

3. Elément de construction composite selon la revendication 2, **caractérisé en ce que** les moyens de liaison (16) ont prise sur la plaque porteuse (4).

4. Elément de construction composite selon la revendication 3, **caractérisé en ce que** la plaque porteuse (4) présente des logements (21) pour les moyens de liaison (16).

5. Elément de construction composite selon l'une des revendications précédentes, **caractérisé en ce qu'**une face extérieure (12) de la plaque thermoconductrice (10) qui est éloignée de la plaque porteuse (4) est pourvue d'au moins un élément de décor (13) qui a contact avec cette face extérieure (12).

6. Elément de construction composite selon l'une des revendications précédentes, **caractérisé en ce que** les extrémités des montants (15) sont décalées en retrait d'un bout par rapport à la face extérieure (!2) de la plaque thermoconductrice (10) qui est éloignée de la plaque porteuse (4).

7. Elément de construction composite selon l'une des revendications précédentes, **caractérisé en ce que** la plaque porteuse (4) présente une plus grande rigidité de matière et/ou de forme que la plaque thermoconductrice (10).

8. Elément de construction composite selon l'une des revendications précédentes, **caractérisé en ce que** la plaque porteuse (4) présente une construction en sandwich avec une couche intérieure (19) et au moins une couche extérieure (18) sur au moins une face extérieure de la plaque porteuse (4).

9. Elément de construction composite selon la revendication 8, **caractérisé en ce que** la couche extérieure (18) présente une épaisseur moindre en comparaison avec la couche intérieure (19) de la plaque porteuse (4).

10. Elément de construction composite selon la revendication 8 ou 9, **caractérisé en ce que** la plaque porteuse (4) présente une couche intérieure (19) qui contient une matière plastique expansée comme le polystyrène ou le polyuréthane et au moins une couche extérieure (18) qui contient une feuille ou un carton épais.

11. Elément de construction composite selon la revendication 8 ou 9, **caractérisé en ce que** la plaque porteuse (4) contient une plaque en placoplâtre qui comprend une couche intérieure (19) qui contient du plâtre avec ou sans renforcement de fibres et au moins une couche extérieure (18) qui contient une feuille ou un carton épais.

12. Elément de construction composite selon l'une des revendications précédentes, **caractérisé en ce qu'**une couche thermoconductrice (6) est intercalée au moins par sections entre les faces de contact (8, 11) de la plaque porteuse (4) et de la plaque thermoconductrice (10) qui sont reliées l'une à l'autre par liaison de matière.

13. Elément de construction composite selon la revendication 12, **caractérisé en ce que** la couche thermoconductrice (6) est constituée par du graphite expansé ou présente au moins une feuille qui contient du graphite expansé.

14. Elément de construction composite selon la revendication 12, **caractérisé en ce que** la plaque thermoconductrice (10) présente une rainure (9) et la plaque porteuse (4) une autre rainure (5) dans laquelle respectivement une partie de la section du tuyau qui existe au moins (2) est logée.

15. Elément de construction composite selon la revendication 14, **caractérisé en ce que** la couche thermoconductrice (6) qui contient du graphite expansé a contact avec au moins une partie de la surface de tuyau du tuyau (2), est intercalée entre la surface de rainure de la rainure (5) de la plaque porteuse (4) et la surface de tuyau du tuyau (2) et fait saillie avec au moins une portion de contact (7) hors de la rainure (5) de la plaque porteuse (4), ceci étant vu perpendiculairement à l'extension en longueur du tuyau (2), cependant que la section de contact qui existe au moins (7) de la couche thermoconductrice (6) qui contient du graphite expansé a contact avec la plaque thermoconductrice (10).

16. Elément de construction composite selon la revendication 14, **caractérisé en ce que** la rainure (5) de la plaque porteuse (4) et l'autre rainure (9) de la plaque thermoconductrice (10) présentent de telles dimensions que le tuyau (2) a contact avec sa surface de tuyau d'une part avec la couche thermoconductrice (6) et d'autre part avec la surface de rainure de l'autre rainure (9) de la plaque thermoconductrice (10).

17. Dispositif de climatisation de sols, de murs ou de plafonds pour un bâtiment contenant au moins un élément de construction composite (1) selon au moins l'une des revendications précédentes.

18. Procédé pour la fabrication d'un élément composite (1) pour un dispositif de climatisation de sols, de murs ou de plafonds d'un bâtiment contenant au moins les étapes suivantes :
a) production d'au moins une plaque porteuse plane (4) en un ou plusieurs matériaux qui ne contiennent pas de graphite expansé,
**caractérisé par** les étapes suivantes :
b) fabrication d'incisions à peu près triangulaires (17) dans une face de contact (8) de la plaque porteuse (4) avec une face de contact associée (11) d'au moins une plaque thermoconductrice (10) si bien qu'au moins deux sections de bord opposées (15) de la plaque porteuse (4) sont séparées par les incisions (17) par un corps de base (20), et ce partiellement mais cependant qu'une liaison matérielle et flexible élastiquement existe entre les sections de bord (15) et le corps de base (20),
c) fabrication d'au moins une rainure (4) dans le corps de base (20) de la plaque porteuse (4) pour au moins une partie de la section d'un tuyau (2) prévu pour l'écoulement d'un fluide caloporteur et/ou fabrication d'une rainure (9) dans la plaque thermoconductrice (10) pour au moins une partie de la section d'un tuyau (2) prévu pour l'écoulement d'un fluide caloporteur,
d) rabattement des sections de bord (15) de la plaque porteuse (4) par rapport au corps de base (20) pour produire une section substantiellement en forme d'U de la plaque porteuse (4),
e) placement de la plaque thermoconductrice (!0) dans la section en forme d'U de la plaque porteuse (4) de telle manière que les sections de bord rabattues de la plaque porteuse recouvrent la plaque thermoconductrice (10) sur ses faces latérales, que la plaque porteuse (10) et la plaque thermoconductrice (10) aient contact mutuel sur les faces de contact (8, 9) et que le tuyau qui existe au moins soit fixé dans la rainure (4) de la plaque porteuse (4) et/ou dans la rainure (9) de la plaque thermoconductrice (10),
f) liaison de matières de la plaque porteuse (4) et de la plaque thermoconductrice (10) sur les faces de contact (8, 11) qui enserrent au moins partiellement les sections de bord (15) de la plaque porteuse et les faces latérales (14) de la plaque thermoconductrice (10) pour obtenir un élément de construction composite à rigidité inhérente propre et autoporteur.

19. Procédé selon la revendication 18, **caractérisé par** la fabrication de logements (11) dans l'élément de construction composite (1) pour des moyens de liaison (16) pour relier l'élément de construction composite (1) au sol ou au mur ou au plafond du bâtiment.

20. Procédé selon la revendication 18 ou 19, **caractérisé par** l'utilisation d'une plaque porteuse (4) en construction en sandwich qui présente un assemblage de couches d'au moins une couche extérieure (18) située à l'extérieur et d'une couche intérieure (19) située à l'intérieur et par la fabrication des incisions (17) dans la plaque porteuse (4) de telle manière qu'au moins une partie de la couche intérieure (19) et, en cas d'existence de deux couches extérieures (18), également l'une des couches extérieures (18) est enlevée mais que l'une ou l'autre couche extérieure (18) reste conservée de telle manière que la couche extérieure existante (18) forme la liaison matérielle et flexible élastiquement existe entre les sections de bord (15) et le corps de base (20).

21. Procédé selon la revendication 20, **caractérisé par** l'utilisation d'une plaque de placoplâtre qui comprend une couche intérieure (19) qui contient du plâtre avec ou sans renforcement de fibres et au moins une couche extérieure (18) qui contient une feuille ou du carton épais ou une plaque qui contient une couche intérieure (19) qui contient une matière plastique expansée comme le polystyrène ou le polyuréthane et au moins une couche extérieure (18) qui contient une feuille ou un carton épais comme plaque porteuse (4).
